# EUROPÄISCHE PATENTSCHRIFT

(11) **EP 2 167 589 B1**
(45) Veröffentlichungstag und Bekanntmachung des Hinweises auf die Patenterteilung: **11.09.2013**
(21) Anmeldenummer: 08774955.2
(22) Anmeldetag: 10.07.2008
(51) Int. Cl.: C09D 5/00, C09D 5/08, C09D 5/10

(54) **KATHODISCHER KORROSIONSSCHUTZ FÜR BEWEHRUNGEN VON STAHLBETONWERKEN**
CATHODE CORROSION PROTECTION FOR REINFORCEMENTS OF REINFORCED CONCRETE STRUCTURES
PROTECTION CATHODIQUE CONTRE LA CORROSION POUR ARMATURES D'OUVRAGES EN BÉTON ARMÉ

(30) Priorität: 10.07.2007 EP 07112178
(43) Veröffentlichungstag der Anmeldung: 31.03.2010
(73) Patentinhaber: Sika Technology AG, 6340 Baar (CH)
(72) Erfinder: BÄNZIGER, Heinz, CH-8427 Freienstein (CH); BLANK, Norman, CH-8803 Rüschlikon (CH); VOGELSANG, Jörg, CH-8967 Widen (CH); SCHULZE, Georg, 70197 Stuttgart (DE)
(74) Vertreter: Sika Patent Attorneys
(86) Internationale Anmeldenummer: PCT/EP2008/058969
(87) Internationale Veröffentlichungsnummer: WO 2009/007413

(56) Entgegenhaltungen:
- EP-A- 0 385 880
- WO-A-92/09664
- DE-A1- 1 669 202
- DATABASE WPI Week 200525 Thomson Scientific, London, GB; AN 2005-236983 XP002456267 & JP 2005 066574 A (TAKENAKA KOMUTEN KK) 17. März 2005 (2005-03-17)
- DATABASE WPI Week 200420 Thomson Scientific, London, GB; AN 2004-205379 XP002456268 & JP 2002 212508 A (KUROSAWA KENSETSU KK) 31. Juli 2002 (2002-07-31)
- DATABASE WPI Week 200274 Thomson Scientific, London, GB; AN 2002-685196 XP002456269 & JP 2002 180266 A (KUROSAWA KENSETSU KK) 26. Juni 2002 (2002-06-26)
- DATABASE WPI Week 199419 Thomson Scientific, London, GB; AN 1994-158052 XP002456270 & SU 1 799 889 A1 (FINE TECHN RES INST) 7. März 1993 (1993-03-07)
- DATABASE WPI Week 198214 Thomson Scientific, London, GB; AN 1982-27512E XP002456271 & JP 57 035975 A (NIPPON KOKAN KK) 26. Februar 1982 (1982-02-26)

## Beschreibung

### Technisches Gebiet

Die Erfindung betrifft das Gebiet des kathodischen Korrosionsschutzes für Bewehrungen von Stahlbetonwerken.

### Stand der Technik

Im Rahmen des kathodischen Korrosionsschutzes ist die Verwendung von Zinkpartikeln, insbesondere von Zinkstaub, oder von Legierungen von Zink als Korrosionsschutzpigment in Grundbeschichtungsmitteln auf Epoxidharzbasis weit verbreitet. Derartige Zusammensetzungen liegen ein- oder zweikomponentig vor und eignen sich vor allem als Korrosionsschutzanstrich für Stahlflächen. Sie sind beispielsweise beschrieben in EP 0 385 880 A2 oder in EP 0 560 785 B1. Für den kathodischen Korrosionsschutz von Bewehrungen von Stahlbetonwerken eignen sich derartige Systeme nicht, da sie als Beschichtung grossflächig aufgetragen werden müssen. Dies ist insbesondere bei der Instandsetzung von Stahlbetonwerken nicht möglich, wo der Bewehrungsstahl nicht vollständig sondern nur punktuell freigelegt wird.

Für den kathodischen Korrosionsschutz von Bewehrungsstahl sind verschiedene Systeme auf der Basis von Zink und Zinklegierungen bekannt und kommerziell erhältlich. Diese sind beispielsweise beschrieben in US 6,193,857 und in WO 2005/121760 A1. Diese Systeme bestehen aus einer vorgefertigten Anode welche mit Drähten versehen ist, mit denen die Anode am Bewehrungsstahl befestigt wird und welche gleichzeitig den notwendigen Kontakt des Bewehrungsstahls mit dem Zink herstellen. Derartige Systeme für den kathodischen Korrosionsschutz haben den Nachteil, dass ihre Montage am Bewehrungsstahl sehr aufwendig ist. Dies ist insbesondere dann der Fall, wenn die Anoden bei Instandsetzungen von Stahlbetonwerken angebracht werden sollen. Dann nämlich muss der Bewehrungsstahl an der Stelle, wo die Anode platziert werden soll, rundum freigelegt werden, da ansonsten die Drähte nicht am Stahl befestigt werden können. Bei noch nicht einbetonierten Bewehrungen ist vor allem der hohe Zeitaufwand bei der Montage derartiger Korrosionsschutzsysteme nachteilig. Weiterhin hat es sich als Nachteil herausgestellt, dass die Anoden, welche mit Drähten am Bewehrungsstahl befestigt sind, nur über eine sehr geringe Kontaktfläche des Stahls mit dem Zink verfügen und dadurch die Korrosionsschutzleistung beeinträchtigt wird.

### Darstellung der Erfindung

Die Aufgabe der vorliegenden Erfindung ist es daher, ein Verfahren für den kathodischen Korrosionsschutz zur Verfügung zu stellen, welches die Nachteile des Stands der Technik überwindet und durch seine vielseitige und einfache Anwendbarkeit einen optimalen Korrosionsschutz bietet.

Erfindungsgemäss wird dies durch die Merkmale des ersten Anspruchs erreicht. Überraschenderweise haben sich Epoxidharzzusammensetzungen, welche einen hohen Anteil an Zinkpartikel als Füllstoff aufweisen, als besonders geeignete Systeme für den kathodischen Korrosionsschutz von Bewehrungsstahl erwiesen.

Die Vorteile der Erfindung sind unter anderem darin zu sehen, dass sich die erfindungsgemässe Verwendung derartiger Zusammensetzungen für den kathodischen Korrosionsschutz von Bewehrungsstahl als sehr einfach und zeitsparend erwiesen hat und auch bei ungünstigen Platzverhältnissen, beispielsweise bei der Instandsetzung von Stahlbetonwerken, bestens funktioniert. Weiterhin vorteilhaft ist, dass die verwendete Zusammensetzung sowohl am Bewehrungsstahl als auch an Beton oder Mörtel haftet und somit auch nach einer Instandsetzung eine kraftschlüssige Konstruktion entsteht, welche im Bereich der Korrosionsschutzsystems keine Schwachstellen aufweist. Als besonderer Vorteil hat sich ebenfalls die gegenüber dem Stand der Technik verbesserte Korrosionsschutzleistung erwiesen, welche insbesondere auf die grössere Kontaktfläche des erfindungsgemässen Korrosionsschutzsystems mit dem Bewehrungsstahl zurückzuführen ist.

Weitere Aspekte der Erfindung sind Gegenstand weiterer unabhängiger Ansprüche. Besonders bevorzugte Ausführungsformen der Erfindung sind Gegenstand der abhängigen Ansprüche.

Die vorliegende Erfindung betrifft die Verwendung einer Zusammensetzung Z**,** umfassend mindestens ein Epoxidharz **A**, mindestens einen Härter **B** für Epoxidharze sowie Zinkpartikel als kathodischen Korrosionsschutz für Bewehrungen von Stahlbetonwerken, wobei die Zusammensetzung **Z** punktuell und in einer durchschnittlichen Schichtdicke von 0.5 bis 8 cm auf den Bewehrungsstahl aufgetragen wird.

Unter dem Begriff "Bewehrung" (oft auch "Armierung" genannt) wird im vorliegenden Dokument die Einlage von Stahl zur Verstärkung in einen Baustoff verstanden. Dieser Stahl wird als "Bewehrungsstahl" bezeichnet und kann beispielsweise in der Form von Stahlmatten, Stahlstäben oder aus einem Geflecht von Stahlstäben angeordnet sein. Hauptsächlich werden Bewehrungen im Betonbau eingesetzt, wobei mit Bewehrungsstahl verstärkter Beton "Stahlbeton" genannt wird. Als "Stahlbetonwerk" wird jede beliebige Konstruktion aus Stahlbeton bezeichnet.

Das Epoxidharz **A**, welches durchschnittlich mehr als eine Epoxidgruppe pro Molekül aufweist, ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharz" verwendet. Die Glastemperatur von Festharzen liegt über der Raumtemperatur, d.h. sie lassen sich bei Raumtemperatur zu schüttfähigen Pulvern zerkleinern. Bevorzugte Epoxid-Festharze weisen die Formel (I) auf.

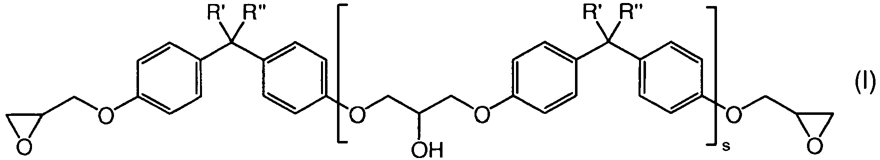

Hierbei stehen die Substituenten R' und R" unabhängig voneinander entweder für H oder CH₃. Weiterhin steht der Index s für einen Wert von ≥ 1.5, insbesondere von 2 bis 12. Derartige Epoxid-Festharze sind beispielsweise kommerziell erhältlich von The Dow Chemical Company, USA, von Huntsman International LLC, USA, oder von Hexion Specialty Chamicals Inc., USA.

Verbindungen der Formel (I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von ≥ 1.5 aufweist.

Bevorzugte Epoxid-Flüssigharze weisen die Formel (II) auf.

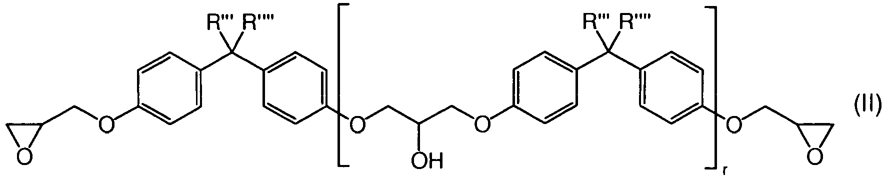

Hierbei stehen die Substituenten R"' und R"" unabhängig voneinander entweder für H oder CH₃. Weiterhin steht der Index r für einen Wert von 0 bis 1. Bevorzugt steht r für einen Wert von ≤ 0.2.

Es handelt sich somit vorzugsweise um Diglycidylether von Bisphenol-A (DGEBA), von Bisphenol-F sowie von Bisphenol-A/F. Die Bezeichnung ,A/F' verweist hierbei auf eine Mischung von Aceton mit Formaldehyd, welche als Edukt bei dessen Herstellung verwendet wird. Solche Flüssigharze sind beispielsweise unter den Handelsnamen Araldite^{®} GY 250, Araldite^{®} PY 304, Araldite^{®} GY 282 von der Firma Huntsman International LLC, USA, oder D.E.R.^{®} 331 oder D.E.R.^{®} 330 von der Firma The Dow Chemical Company, USA, oder unter den Handelsnamen Epikote^{®} 828 oder Epikote^{®} 862 von der Firma Hexion Specialty Chamicals Inc., USA, kommerziell erhältlich.

Bevorzugt stellt das Epoxidharz **A** ein Epoxid-Flüssigharz der Formel (II) dar. In einer noch mehr bevorzugten Ausführungsform enthält die Zusammensetzung **Z** sowohl mindestens ein Epoxid-Flüssigharz der Formel (II) als auch mindestens ein Epoxid-Festharz der Formel (I).

Der Anteil von Epoxidharzes **A** beträgt vorzugsweise 5 bis 25 Gew.-%, insbesondere 8 bis 20 Gew.-%, bevorzugt 10 bis 16 Gew.-%, bezogen auf das Gesamtgewicht der Zusammensetzung **Z.**

Bevorzugt wird das Epoxidharz **A** zusammen mit mindestens einem Epoxidgruppen aufweisenden Reaktivverdünner **G** eingesetzt. Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ bis C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether und dergleichen.
- Glycidylether von difunktionellen gesättigten oder ungesättigten, verzweigten oder unverzweigten, zyklischen oder offenkettigen C₂ bis C₃₀ Alkoholen, z.B Ethylenglykol-, Butandiol-, Hexandiol-, Octandiolgylcidylether, Cyclohexandimethanoldigylcidylether, Neopentylglycoldiglycidylether und dergleichen.
- Glycidylether von tri- oder polyfunktionellen, gesättigten oder ungesättigten, verzweigten oder unverzweigten, zyklischen oder offenkettigen Alkoholen wie epoxidiertes Rhizinusöl, epoxidiertes Trimethylolpropan, epoxidiertes Pentaerythritol oder Polyglycidylether von aliphatischen Polyolen wie Sorbitol, Glycerin, Trimethylolpropan und dergleichen.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und dergleichen.
- Epoxidierte Amine wie N, N-Diglycidylcyclohexylamin und dergleichen.
- Epoxidierte Mono- oder Dicarbonsäuren wie Neodecansäureglycidylester, Methacrylsäureglycidylester, Benzoesäureglycidylester, Phthalsäure-, Tetra- und Hexahydrophthalsäurediglycidylester, Diglycidylester von dimeren Fettsäuren und dergleichen.
- Epoxidierte di- oder trifunktionelle, nieder- bis hochmolekulare Polyetherpolyole wie Polyethylenglycoldiglycidylether, Polypropyleneglycoldiglycidylether und dergleichen.

Besonders bevorzugt sind Hexandioldiglycidylether, Kresylglycidylether, p*-tert*.-Butylphenylglycidylether, Polypropylenglycoldiglycidylether und Polyethylenglycoldiglycidylether.

Vorteilhaft beträgt der Gesamtanteil des Epoxidgruppen aufweisenden Reaktivverdünners **G** 0.5 bis 20 Gew.-%, insbesondere 1 bis 8 Gew.-%, bezogen auf das Gewicht der gesamten Zusammensetzung **Z**.

Der Härter **B** weist reaktive Gruppen auf, welche mit den Epoxidgruppen des Epoxidharzes **A** und gegebenenfalls des Reaktiwerdünners **G** reagieren. Derartige Härter sind insbesondere Polyamine und/oder Polymercaptane.
Polyamine sind insbesondere Diamine oder Triamine, bevorzugt aliphatische oder cycloaliphatische Diamine oder Triamine.
Beispielsweise sind geeignete Polyamine:
- Aliphatische Diamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, 2-Methylpentamethylendiamin, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals, Inc., Japan), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, Piperazin, 1-(2-Aminoethyl)piperazin, 1,3- und 1,4-Xylylendiamin;
- zwei- oder mehrwertige aliphatische Amine, welche neben einer oder mehreren primären Aminogruppen mehr als eine sekundäre Aminogruppe tragen, wie Diethylentriamin (DETA), Triethylentetramin (TETA), Tetraethylenpentamin (TEPA), Pentaethylenhexamin und höhere Homologe linearer Polyethylenamine, N,N'-Bis-(3-aminopropyl)-ethylendiamin, Polyvinylamine, sowie Polyethylenimine unterschiedlichen Polymerisationsgrades (Molmassen-Bereich 500 bis 1'000'000 g/mol), wie sie beispielsweise unter dem Handelsnamen Lupasol^{®} von BASF, Deutschland, in reiner Form oder als wässrige Lösungen erhältlich sind, wobei diese Polyethylenimine neben primären und sekundären auch tertiäre Aminogruppen enthalten;
- Polyamidoamine
- Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit zwei oder drei Aminogruppen, beispielsweise erhältlich unter dem Namen Jeffamine^{®} (von Huntsman International LLC, USA,), unter dem Namen Polyetheramin (von BASF, Deutschland) oder unter dem Namen PC Amine^{®} (von Nitroil, Deutschland), sowie Mischungen der vorgenannten Polyamine.

Geeignete Triamine werden beispielsweise unter der Jeffamine^{®} T-Line von der Firma Huntsman International LLC, USA, vertrieben, wie beispielsweise Jeffamine^{®} T-3000, Jeff-amine^{®} T-5000 oder Jeffamine^{®} T-403.
Als Härter **B** bevorzugte Diamine sind insbesondere Polyoxyalkylen-Polyamine mit zwei Aminogruppen entsprechend der Formel (III).

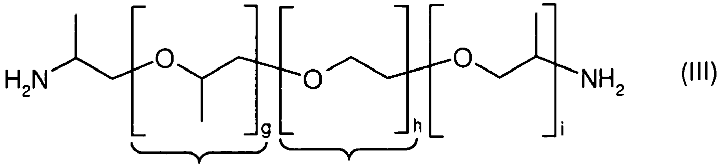

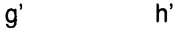

Hierbei stellen g' das Strukturelement, welches von Propylenoxid stammt, und h' das Strukturelement, welches von Ethylenoxid stammt, dar. Zudem stehen g, h und i je für Werte von 0 bis 40, mit der Massgabe, dass die Summe von g, h und i ≥ 1 ist.
Insbesondere sind Molekulargewichte zwischen 200 und 5000 g/mol bevorzugt. Insbesondere bevorzugt sind Jeffamine^{®}, wie sie unter der D-Linie und ED-Linie von Huntsman International LLC, USA, angeboten werden, wie zum Besipiel Jeffamine^{®} D-230, Jeffamine^{®} D-400, Jeffamine^{®} D-2000, Jeffamine^{®} D-4000, Jeffamine^{®} ED-600, Jeff-amine^{®} ED-900, Jeffamine^{®} ED-2003 oder Jeffamine^{®} EDR-148.

Geeignete Polymercaptane sind beispielsweise Polymercaptoacetate von Polyolen. Es handelt sich hierbei insbesondere um Polymercaptoacetate der folgenden Polyole:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Die Polyoxyalkylendiole können unterschiedliche Ungesättigtheitsgrade (gemessen nach ASTM D-2849-69 und angegeben in Milliäquivalent Ungesättigtheit pro Gramm Polyol (mEq/g)) aufweisen. Jene mit einem niedrigen Ungesättigtheitsgrad werden beispielsweise mit Hilfe von so genannten Double Metal Cyanide Komplex-Katalysatoren (DMC-Katalysatoren) hergestellt, jene mit einem höheren Ungesättigtheitsgrad werden beispielsweise mit Hilfe von anionischen Katalysatoren wie NaOH, KOH, CsOH oder Alkalialkoholaten hergestellt. Insbesondere geeignet sind Polyoxyalkylendiole oder Polyoxyalkylentriole mit einem Ungesättigtheitsgrad ≤ 0.02 mEq/g und mit einem Molekulargewicht im Bereich von 300 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Unter "Molekulargewicht" versteht man im vorliegenden Dokument das Molekulargewichtsmittel Mn.
   Ebenfalls besonders geeignet sind so genannte Ethylenoxid-terminierte ("EOendcapped", ethylene oxide endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und - triole, nach Abschluss der Polypropoxylierungsreaktion mit Ethylenoxid weiter alkoxyliert werden und dadurch primäre Hydroxylgruppen aufweisen.
- Hydroxyl-terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran GmbH, Deutschland, unter dem Namen Lupranol^{®} geliefert werden; - Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten, zum Aufbau der Polyesterpolyole eingesetzten, Alkohole mit Dialkylcarbonaten, Dia-rylcarbonaten oder Phosgen zugänglich sind;
- 1,2-Ethandiol, Diethylenglykol, 1,2-Propandiol, Dipropylenglykol, 1,4-Butandiol, 1,5-Pentandiol, 1,6-Hexandiol, 1,7-Hepandiol, Octandiol, Nonandiol, Decandiol, Neopentylglykol, Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol, Di(trimethylolpropan) (= 3-(2,2-Bis-hydroxymethyl-butoxy)-2-ethyl-2-hydroxymethylpropan-1-ol), Di(trimethylolethan) (= 3-(3-Hydroxy-2-hydroxymethyl-2-methyl-propoxy)-2-hydroxymethyl-2-methyl-propan-1-ol), Diglycerin (= Bis-(2,3-dihydroxypropyl)-ether);
- Polyole, wie sie durch Reduktion von dimerisierten Fettsäuren erhalten werden.

Insbesondere bevorzugt sind Glycol-dimercaptoacetat, Trimethylolpropantrimercaptoacetat und Butandiol-dimercaptoacetat.

Als Polymercaptane sind insbesondere Dimercaptane bevorzugt. Meist bevorzugt sind Dimercaptane der Formel (IV).

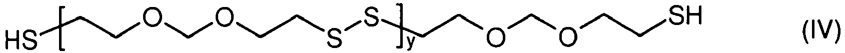

Hierbei steht y für einen Wert von 1 bis 45, insbesondere von 5 bis 23. Die bevorzugten Molekulargewichte liegen zwischen 800 und 7500 g/mol, insbesondere zwischen 1000 und 4000 g/mol,.
Derartige Polymercaptane sind kommerziell erhältlich unter der Thiokol^{®} LP-Reihe von Toray Fine Chemicals Co., Ltd., Japan.

Als Härter **B** können auch Addukte von Polyaminen und/oder Polymercaptanen, insbesondere der oben erwähnten Polyamine und/oder Polymercaptane, mit Epoxiden, insbesondere mit den vorgängig erwähnten Epoxidharzen **A** und/oder den Reaktivverdünnern **G,** dienen.

Die Menge des Härters **B** kann so bemessen sein, dass seine mit Epoxidgruppen reaktiven Gruppen gegenüber den Epoxidgruppen des Epoxidharzes **A** und gegebenenfalls denen des Reaktivverdünners **G** unter- bzw. überstöchiometrisch vorliegen. Bevorzugt ist die Menge des Härters **B** so bemessen, dass die mit Epoxidgruppen reaktiven Gruppen des Härters **B** in der Zusammensetzung **Z** stöchiometrisch mit den Epoxidgruppen des Epoxidharzes **A** und gegebenenfalls des Reaktivverdünners **G** reagieren.

Die Zinkpartikel in der Zusammensetzung **Z** sind insbesondere ausgewählt aus der Gruppe bestehend aus Zinkstaub, Zinkpulver, Zinkspäne, Zinkblättchen, Zinkgriess, Zinkgranulat und dergleichen. Insbesondere sind die Zinkpartikel Zinkblättchen, oft auch "Zinkflakes" genannt.
Die Zinkpartikel weisen vorzugsweise eine durchschnittliche Teilchengrösse von 0.5 bis 500 µm, insbesondere von 1 bis 50 µm, bevorzugt von 10 bis 20 µm, auf.

Der Anteil der Zinkpartikel beträgt vorzugsweise 55 bis 90 Gew.-%, insbesondere 60 bis 85 Gew.-%, bevorzugt 65 bis 80 Gew.-%, an der gesamten Zusammensetzung **Z**.

Unter dem Begriff "Zinkpartikel" werden hier auch Legierungen von Zink, welche als Partikel vorliegen, verstanden. In derartigen Legierungen liegt das Zink mit mindestens einem weiteren Metall vor, welches ein negativeres Standardpotential als das Eisen des Bewehrungsstahls aufweist. Insbesondere sind diese Legierungsbestandteile des Zinks Aluminium und/oder Magnesium, wobei dem Fachmann klar ist, dass die Wahl der Legierunasbestandteile auf die Bedingungen wie beispielsweise dem pH-Wert im Stahlbeton abgestimmt sein muss.

Bevorzugt werden auch Mischungen von Zinkpartikeln mit Partikeln von mindestens einem weiteren Metall, welches ein negativeres Standardpotential als das Eisen des Bewehrungsstahls aufweist. Insbesondere sind diese Metallpartikel Aluminium- und/oder Magnesiumpartikel. Dabei ist dem Fachmann klar ist, dass die Wahl der eingesetzten Metalle auf die Bedingungen wie beispielsweise dem pH-Wert im Stahlbeton abgestimmt sein muss.

Insbesondere eignen sich Mischungen aus Zink- und Aluminiumpartikel, wobei der Anteil der Aluminiumpartikel 1 bis 50 Gew.-%, insbesondere 10 bis 50 Gew.-%, bevorzugt 20 bis 40 Gew.-% bezogen auf die gesamte Zusammensetzung **Z** beträgt.
Die Aluminiumpartikel liegen insbesondere in Form von Aluminiumstaub, Aluminiumpulver, Aluminiumspäne, Aluminiumblättchen, Aluminiumgriess, Aluminiumgranulat und dergleichen vor.
Vorzugsweise weisen die Aluminiumpartikel eine durchschnittliche Teilchengrösse von 1 bis 1000 µm, insbesondere von 1 bis 500 µm, bevorzugt von 5 bis 400 µm, auf.

Weiterhin kann die Zusammensetzung **Z** zusätzlich ein Metallhalogenid aufweisen. Insbesondere handelt es sich dabei um ein Halogenid eines Alkalimetalls, bevorzugt von Lithium. Meist bevorzugt ist das Metallhalogenid Lithiumchlorid.
Der Anteil des Metallhalogenids liegt dabei vorzugsweise bei 0.1 bis 20 Gew.-%, insbesondere 1 bis 15 Gew.-%, bevorzugt 1 bis 10 Gew.-%, an der gesamten Zusammensetzung **Z**.
Demnach betrifft ein weiterer Aspekt der Erfindung auch eine Zusammensetzung **Z** umfassend mindestens ein Epoxidharz **A**; mindestens einen Härter **B** für Epoxidharze; Zinkpartikel; sowie ein Metallhalogenid, insbesondere ein Lithiumhalogenid, bevorzugt Lithiumchlorid.
Überraschenderweise hat sich gezeigt, dass die Zugabe eines Metallhalogenids, insbesondere Lithiumchlorid, die Leistungsfähigkeit der Zusammensetzung **Z** als kathodischer Korrosionsschutz verbessert. Dies ist insbesondere auf die hygroskopischen Eigenschaften des Metallhalogenids zurückzuführen, wodurch der Feuchtigkeitstransport zur und innerhalb der Anode beschleunigt wird.

Vorzugsweise liegt die Zusammensetzung **Z** als zwei- oder als dreikomponentige Zusammensetzung vor.
Liegt die Zusammensetzung **Z** als dreikomponentige Zusammensetzung vor, umfasst die erste Komponente **K1** mindestens ein Epoxidharz **A,** die zweite Komponente **K2** mindestens einen Härter **B** und die dritte Komponente **K3** mindestens die Zinkpartikel.

Liegt die Zusammensetzung **Z** als zweikomponentige Zusammensetzung vor, sind die Zinkpartikel entweder in einer ersten Komponente **K1'** zusammen mit dem Epoxidharz **A** oder in einer zweiten Komponente **K2'** zusammen mit dem Härter **B** oder auch in beiden Komponenten **K1'** und **K2'** enthalten.

Die Komponenten **K1, K2** und **K3** bzw. **K1'** und **K2'** können dabei unabhängig voneinander noch weitere Bestandteile aufweisen, welche insbesondere ausgewählt sind aus der Gruppe bestehend aus Katalysatoren, Hitze- und/oder Lichtstabilisatoren, Thixotropiermittel, Weichmacher, Lösungsmittel, Netzmittel, insbesondere Pigmentnetzmittel, mineralische oder organische Füllstoffe, Inhibitoren, Entschäumer, Entlüfter, Antiabsetzmittel, Rheologiemodifikatoren, Treibmittel, Farbstoffe und Pigmente. Dem Fachmann ist dabei selbstverständlich klar, dass innerhalb einer Komponente keine Bestandteile gemischt werden, welche miteinander reagieren und dadurch negative Auswirkungen auf die Lagerstabilität der Zusammensetzung **Z** haben könnten.

Für die Verwendung der Zusammensetzung **Z** als kathodischen Korrosionsschutz für Bewehrungen von Stahlbetonwerken, weist die Zusammensetzung **Z** vor der Aushärtung vorzugsweise eine verformbare, pastöse Konsistenz auf, wobei sie im Laufe der Zeit durch die Reaktion des Epoxidharzes **A** und gegebenenfalls des Reaktivverdünners **G** mit dem Härter **B aushärtet.**

Die Zusammensetzung **Z** wird punktuell an mindestens einer Stelle auf den Bewehrungsstahl aufgetragen.
Die durchschnittliche Schichtdicke, mit der die Zusammensetzung **Z** punktuell auf dem Bewehrungsstahl aufgetragenen wird beträgt 0.5 bis 8 cm, insbesondere von 0.75 bis 6 cm, bevorzugt von 1 bis 4 cm.
Die Masse von jeweils einer dieser punktuellen Auftragungen beträgt durchschnittlich vorzugsweise 100 bis 500 g, insbesondere von 150 bis 400 g, bevorzugt von 200 bis 300 g.

Typischerweise erfolgt die punktuelle Auftragung an mehreren Stellen auf den Bewehrungsstahl, vorzugsweise in einem Abstand von 30 bis 200 cm, insbesondere von 40 bis 150 cm, bevorzugt von 50 bis 120 cm, zueinander.

Insbesondere betrifft die Erfindung die Verwendung der Zusammensetzung **Z,** wie sie vorhergehend beschrieben ist, als kathodischen Korrosionsschutz für Bewehrungen von Stahlbetonwerken umfassend die Schritte:
i) Mischen Komponenten **K1, K2** und **K3** bzw. **K1'** und **K2';**
ii) Applizieren der Zusammensetzung **Z** auf den Bewehrungsstahl;
iii) Aushärten der Zusammensetzung **Z.**

Die Applikation der Zusammensetzung **Z** erfolgt typischerweise von Hand, mit einer Kelle, Spachtel oder dergleichen oder direkt aus einer Verpackung wie beispielsweise einer Kartusche auf den freigelegten, vorzugsweise entfetteten und entrosteten Bewehrungsstahl. Aufgrund der Konsistenz der Zusammensetzung **Z** bedarf es für die Applikation keine zusätzlichen Befestigungsmittel wie Drähte und dergleichen. Die Zusammensetzung haftet direkt am Bewehrungsstahl, aber auch am Beton oder am Mörtel der Umgebung.
Die Aushärtung der Zusammensetzung **Z** erfolgt dabei durch die Reaktion der Epoxidgruppen des Epoxidharzes **A** und gegebenenfalls des Reaktivverdünners **G** mit den reaktiven Gruppen des Härters **B.**

Der Bewehrungsstahl, an welchem die Zusammensetzung **Z** angebracht wurde, kann nach oder bereits während der Aushärtungsreaktion des Epoxidharzes **A** mit dem Härter **B** einbetoniert werden oder mit Reparaturmörtel überdeckt werden. Vorzugsweise erfolgt vor der Einbetonierung bzw. vor der Überdeckung mit Reparaturmörtel die Aushärtung der Zusammensetzung **Z** während etwa 24 Stunden.
Der Reparaturmörtel, mit welchem eine Ausbruchs- bzw. Reparaturstelle überdeckt wird, haftet am Beton, am Stahl und an der Zusammensetzung **Z.** Durch diese Art der gegenseitigen Verbindung ergibt sich eine Art monolithischer Aufbau und es entsteht eine kraftschlüssige Konstruktion, welche im Bereich der Korrosionsschutzsystems keine Schwachstellen aufweist.

Weiterhin umfasst die Erfindung ein Verfahren zur Herstellung eines Schichtverbundkörpers bestehend aus Bewehrungsstahl, Beton und/oder Mörtel und einer Schicht, welche durch die Aushärtungsreaktion einer Zusammensetzung **Z** erhalten wurde, wobei eine Zusammensetzung **Z** umfassend
a) mindestens ein Epoxidharz **A;**
b) mindestens einen Härter **B** für Epoxidharze; und
c) Zinkpartikel;
punktuell in einer durchschnittlichen Schichtdicke von 0.5 bis 8 cm, insbesondere von 0.75 bis 6 cm, bevorzugt von 1 bis 4 cm, am Bewehrungsstahl angebracht wird und danach mit einer Schicht Beton oder Mörtel überdeckt wird, sodass die Schicht, welche durch die Aushärtungsreaktion einer Zusammensetzung **Z** erhalten wurde zumindest teilweise zwischen einer Schicht Bewehrungsstahl und einer Schicht Beton oder Mörtel liegt.

Aus diesem Verfahren resultiert ein Schichtverbundkörper bestehend aus Bewehrungsstahl, Beton und/oder Mörtel bzw. Reparaturmörtel und einer Schicht welche durch die Aushärtungsreaktion einer Zusammensetzung **Z**, wie sie vorhergehend beschreiben ist, erhalten wurde.

### Kurze Beschreibung der Zeichnungen

Im Folgenden werden anhand der Zeichnungen Ausführungsbeispiele der Erfindung näher erläutert. Gleiche oder gleich wirkende Elemente sind in den verschiedenen Figuren mit den gleichen Bezugszeichen versehen.
Selbstverständlich ist die Erfindung nicht auf gezeigte und beschriebene Ausführungsbeispiele beschränkt.

Es zeigen:
- Figur 1: eine schematische Darstellung von Bewehrungsstahl mit punktuell aufgetragener Zusammensetzung **Z**;
- Figur 2: eine schematische Darstellung eines Querschnitts durch eine auf Bewehrungsstahl punktuell aufgetragene Zusammensetzung **Z** bzw. eines Querschnitts durch die Linie A - A in Figur 1;
- Figur 3: eine schematische Darstellung einer Ausbruch- bzw. Reparaturstelle an einem Stahlbetonwerk;
- Figur 4: eine schematische Darstellung eines Querschnitts durch eine Ausbruch- bzw. Reparaturstelle an einem Stahlbetonwerk;
- Figur 5: eine schematische Darstellung eines Schichtverbundkörpers mit einer Schicht Bewehrungsstahl, einer Schicht der Zusammensetzung **Z**, welche gegebenenfalls mindestens teilweise ausgehärtet ist, und einer Schicht Mörtel;
- Figur 6: eine schematische Darstellung eines Schichtverbundkörpers mit einer Schicht Beton, einer Schicht Bewehrungsstahl, einer Schicht der Zusammensetzung **Z**, welche gegebenenfalls mindestens teilweise ausgehärtet ist, und einer Schicht Mörtel.

In den Figuren sind nur die für das unmittelbare Verständnis der Erfindung wesentlichen Elemente gezeigt.

### Wege zur Ausführung der Erfindung

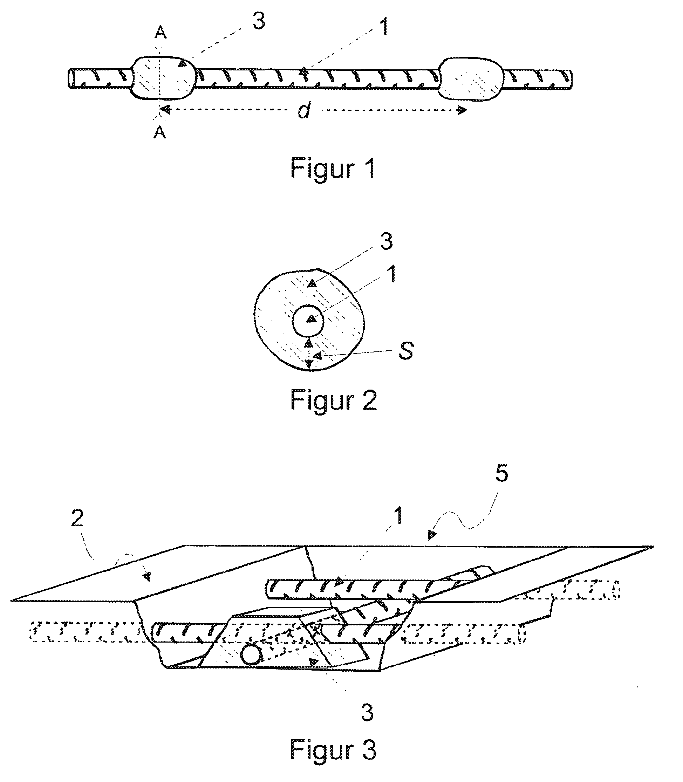

Figur 1 zeigt in schematischer Darstellung auf den Bewehrungsstahl 1 punktuell aufgetragene Zusammensetzung **Z** 3, wie sie beispielsweise an freistehendem, noch nicht einbetoniertem Bewehrungsstahl von Hand aufgetragen wird. Typischerweise weist die aufgetragene Zusammensetzung **Z** 3 dabei die Form eines Klumpens auf. Um eine optimale Korrosionsschutzleistung zu erzielen, wird die Zusammensetzung **Z** 3 an mehreren Stellen auf den Bewehrungsstahl aufgetragen. Die punktuellen Auftragungen der Zusammensetzung **Z** 3 erfolgen vorzugsweise in einem Abstand d von 30 bis 200 cm, insbesondere von 40 bis 150 cm, bevorzugt von 50 bis 120 cm, zueinander.
Figur 2 zeigt in schematischer Darstellung einen Querschnitt durch eine punktuell auf Bewehrungsstahl 1 aufgetragene Zusammensetzung **Z** 3 entlang der Linie A - A in Figur 1. Die durchschnittliche Schichtdicke S der aufgetragenen Zusammensetzung beträgt vorzugsweise 0.5 bis 8 cm, insbesondere von 0.75 bis 6 cm, bevorzugt von 1 bis 4 cm.
Figur 3 zeigt eine schematische perspektivische Darstellung eines Stahlbetonwerks 2 mit einer Ausbruchs- bzw. Reparaturstelle 5 in der eine Zusammensetzung **Z** 3 auf den Bewehrungsstahl 1 punktuell aufgetragen worden ist. In dieser Weise wird die Zusammensetzung **Z** insbesondere bei der Instandsetzung von Stahlbetonwerken eingesetzt.

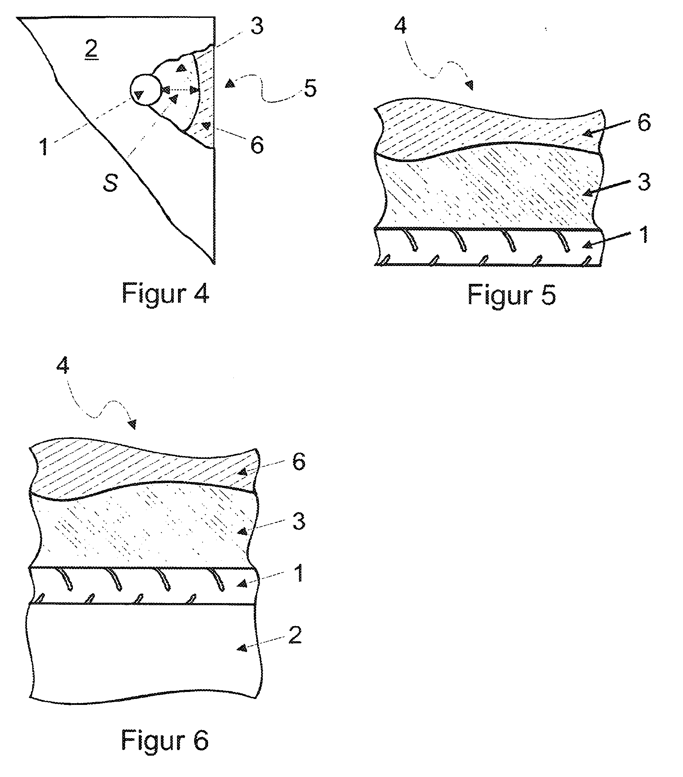

Figur 4 zeigt in schematischer Darstellung einen Querschnitt durch eine Ausbruchs- bzw. Reparaturstelle 5 in der eine Zusammensetzung **Z** 3 auf den Bewehrungsstahl 1 appliziert wurde. Die Ausbruchs- bzw. Reparaturstelle 5 ist im Anschluss an den Auftrag der Zusammensetzung **Z** 3 mit einem Reparaturmörtel 6 überdeckt worden.
Die Einsatzmöglichkeiten der Zusammensetzung **Z** für Instandsetzungen von Stahlbetonwerken, wie sie in den Figuren 3 und 4 dargestellt sind, erweisen sich als besonders vorteilhaft, weil der Bewehrungsstahl 1 nur an einigen wenigen ausgewählten Stellen freigesetzt werden muss um den Korrosionsschutz eines bereits bestehenden Stahlbetonwerks zu erneuern. Weiterhin vorteilhaft ist, dass der Bewehrungsstahl an einer Ausbruchs- bzw. Reparaturstelle 5 nicht grossflächig und vollständig, das heisst rund herum, freigesetzt werden muss. Der Platzbedarf ist gering und der einseitige Zugang zum Bewehrungsstahl reicht zum Anbringen der Zusammensetzung **Z** aus, da sie nicht mit Drähten oder anderen Befestigungsmitteln am Bewehrungsstahl befestigt werden muss, sondern einfach am Bewehrungsstahl angeklebt werden kann ohne die Verwendung eines Klebstoffs. Ebenfalls entsteht durch die einseitige Anbringung eine für den Korrosionsschutz ausreichende Kontaktfläche zwischen der Zusammensetzung **Z** und dem Bewehrungsstahl. Durch die Verklebung der Zusammensetzung **Z** mit dem Stahl und dem Stahlbeton und der guten Haftung des Reparaturmörtels auf dem Stahl, dem Stahlbeton und auf der Zusammensetzung **Z,** bzw. auf der ausgehärteten Zusammensetzung **Z,** entsteht an der Ausbruchs- bzw. Reparaturstelle 5, keine Schwachstelle innerhalb der Stahlbetonwerks sondern eine kraftschlüssige Verbindung.
Figur 5 und Figur 6 zeigen je einen Schichtverbundkörper 4, bestehend aus Bewehrungsstahl 1, der Zusammensetzung **Z** 3, welche gegebenenfalls ausgehärtet ist, und Beton 2 und/oder Mörtel bzw. Reparaturmörtel 6.

### Beispiele

### Herstellung der Zusammensetzung Z1

Es wurde folgende Zusammensetzung **Z1** hergestellt:
Als Komponente **K1** wurde die Komponente A und als Komponente **K2** die Komponente B des kommerziell erhältlichen Produkts Sikafloor^{®}-156 von der Sika Deutschland GmbH verwendet. Die Komponenten **K1** und **K2** wurden in einem Gewichtsverhältnis **K1 : K2** von 3 : 1 mit Hilfe einer Mischvorrichtung miteinander vermischt.
Als Komponente **K3** wurde Zinkgriess mit einer Partikelgrösse von < 45 µm verwendet, welches kommerziell unter der Bezeichnung ZG777 von der Firma Eckart Switzerland SA, erhältlich ist. Die Komponente **K3** wurde in einem Gewichtsverhältnis **K3 : (K1+K2)** von 2.5 : 1 eingesetzt und mit Hilfe einer Mischvorrichtung vermischt.

### Herstellung des Versuchsmörtels

Es wurde folgende Mörtelmischung hergestellt:

| | |
|---|---|
| Zement CEM I 42.5 | 8.4 kg |
| Kalksteinfiller | 3 kg |
| Sand 0 bis 1 mm | 22 kg |
| Sand 1 bis 4 mm | 25 kg |

Der Zement, der Filler und die Sande wurden in einem Mischer trocken gemischt. Anschliessend wird das Anmachwasser, in welchem 6.6 Gew.-% Kochsalz (NaCl), bezogen auf die gesamte Wassermenge, gelöst sind, zugegeben. Der Wasser/Zement-Wert weist einen Wert von 0.75 auf.

### Beschreibung der Versuche

Es wurden je zwei Stäbe aus Bewehrungsstahl in einen Block Versuchsmörtel eingebettet. Einer der Bewehrungsstahl-Stäbe wurde mit einem Korrosionsschutzsystem versehen, der zweite lag aus Vergleichsgründen ungeschützt vor.
Die Proben wurden während 13 Monaten einem Feuchtklima bei einer Temperatur von 20 °C und einer relativen Luftfeuchtigkeit von 95 % gelagert und anschliessend zur Beurteilung der Korrosion geöffnet. Die Bewertung der Korrosion beruhte dabei auf einer visuellen Analyse, wobei die einzelnen Proben miteinander verglichen wurden.

Als Bewertungsskala wurde festgelegt:
- -1:: Stahl mit Korrosionsschutzsystem zeigt mehr Korrosion als Stahl ohne Korrosionsschutzsystem;
- 0:: kein Unterschied zwischen den beiden Stahlproben;
- 1:: 50 bis 75 % Korrosion am Stahl mit Korrosionsschutzsystem im Vergleich zum Stahl ohne Korrosionsschutzsystem;
- 2:: 20 bis 50 % Korrosion am Stahl mit Korrosionsschutzsystem im Vergleich zum Stahl ohne Korrosionsschutzsystem;
- 3:: Keine sichtbare Korrosion am Stahl mit Korrosionsschutzsystem

Als Korrosionsschutzsysteme wurden die Zusammensetzung **Z1** und die kommerziell erhältlichen Produkte Galvashield^{®} XP und Galvashield^{®} XP+ von der Firma Vector Corrosion Technologies Ltd., Canada, getestet.

### Resultate

| | |
|---|---|
| Zusammensetzung **Z1** | 2 |
| Galvashield^{®} XP | -1 |
| Galvashield^{®} XP+ | 1 |

Die Resultate zeigen auf, dass die Zusammensetzung **Z1** bzw. die ausgehärtete Zusammensetzung **Z1** gegenüber Referenzbeispielen eine bessere Korrosionsschutzleistung aufweist. Das Referenzbeispiel Galvashield^{®} XP+ zeigt eine solide Korrosionsschutzleistung, jedoch weist es gleich wie das Referenzbeispiel Galvashield^{®} XP Nachteile in der aufwendigen Montage auf. Das Referenzbeispiel Galvashield^{®} XP weist unter den Versuchsbedingungen eine ungenügende Korrosionsschutzleistung auf.

### Bezugszeichenliste

- 1: Bewehrung/Bewehrungsstahl
- 2: Stahlbetonwerk/Beton
- 3: punktuell aufgetragene Zusammensetzung **Z** bzw. ausgehärtete Zusammensetzung **Z**
- 4: Schichtverbundkörper
- 5: Ausbruch- bzw. Reparaturstelle
- 6: Mörtel/Reparaturmörtel
- *d*: Abstand
- *S*: Schichtdicke

## Patentansprüche

1. Verwendung einer Zusammensetzung **Z** umfassend
a) mindestens ein Epoxidharz **A**;
b) mindestens einen Härter **B** für Epoxidharze; und
c) Zinkpartikel;
als kathodischen Korrosionsschutz für Bewehrungen (1) von Stahlbetonwerken (2),
**dadurch gekennzeichnet, dass** die Zusammensetzung **Z** punktuell und in einer durchschnittlichen Schichtdicke (S) von 0.5 bis 8 cm auf den Bewehrungsstahl aufgetragen wird.

2. Verwendung gemäss Anspruch 1,
**dadurch gekennzeichnet,**
**dass** die Zusammensetzung **Z** eine pastöse Konsistenz aufweist.

3. Verwendung gemäss einem der vorhergehenden Ansprüche,
**dadurch gekennzeichnet,**
**dass** der Anteil des Epoxidharzes **A** 5 bis 25 Gew.-%, insbesondere 8 bis 20 Gew.-%, bevorzugt 10 bis 16 Gew.-%; und
**dass** der Anteil der Zinkpartikel 55 bis 90 Gew.-%, insbesondere 60 bis 85 Gew.-%, bevorzugt 65 bis 80 Gew.-%;
bezogen auf das Gesamtgewicht der Zusammensetzung **Z**, betragen.

4. Verwendung gemäss einem der vorhergehenden Ansprüche,
**dadurch gekennzeichnet,**
**dass** die Zinkpartikel ausgewählt sind aus der Gruppe bestehend aus Zinkstaub, Zinkpulver, Zinkspäne, Zinkblättchen, Zinkgriess, Zinkgranulat und dergleichen.

5. Verwendung gemäss einem der vorhergehenden Ansprüche,
**dadurch gekennzeichnet,**
**dass** die Zinkpartikel eine durchschnittliche Teilchengrösse von 0.5 bis 500 µm, insbesondere von 1 bis 50 µm, bevorzugt von 10 bis 20 µm, aufweisen.

6. Verwendung gemäss einem der vorhergehenden Ansprüche,
**dadurch gekennzeichnet,**
**dass** die Zusammensetzung **Z** in einer durchschnittlichen Schichtdicke (S) von 0.75 bis 6 cm, bevorzugt von 1 bis 4 cm, auf den Bewehrungsstahl (1) aufgetragen wird.

7. Verwendung gemäss einem der vorhergehenden Ansprüche,
**dadurch gekennzeichnet,**
**dass** je 100 bis 500 g, insbesondere 150 bis 400 g, bevorzugt 200 bis 300 g der Zusammensetzung **Z** (3) punktuell auf den Bewehrungsstahl (1) aufgetragen werden.

8. Verwendung gemäss einem der vorhergehenden Ansprüche,
**dadurch gekennzeichnet,**
**dass** die Zusammensetzung **Z** (3) punktuell an mehreren Stellen in einem Abstand (*d*) von 30 bis 200 cm, insbesondere von 40 bis 150 cm, bevorzugt von 50 bis 120 cm, auf den Bewehrungsstahl (1) aufgetragen wird.

9. Verwendung gemäss einem der vorhergehenden Ansprüche,
**dadurch gekennzeichnet,**
**dass** die Zusammensetzung **Z** als zwei- oder dreikomponentige Zusammensetzung vorliegt.

10. Verwendung gemäss einem der vorhergehenden Ansprüche,
**dadurch gekennzeichnet,**
**dass** die Zusammensetzung **Z** als dreikomponentige Zusammensetzung vorliegt, wobei die erste Komponente **K1** das Epoxidharz **A** umfasst; die zweite Komponente **K2** den Härter **B** umfasst; und die dritte Komponente **K3** die Zinkpartikel umfasst.

11. Verwendung gemäss einem der Ansprüche 1 bis 9,
**dadurch gekennzeichnet,**
**dass** die Zusammensetzung **Z** als zweikomponentige Zusammensetzung vorliegt, wobei die Zinkpartikel
entweder in einer ersten Komponente **K1'** zusammen mit dem Epoxidharz **A** enthalten sind;
oder in einer zweiten Komponente **K2'** zusammen mit dem Härter **B** enthalten sind;
oder auch in beiden Komponenten **K1'** und **K2'** enthalten sind.

12. Verfahren zur Herstellung eines Schichtverbundkörpers (4) bestehend aus Bewehrungsstahl (1), Beton (2) und/oder Mörtel (6) und einer Schicht, welche durch die Aushärtungsreaktion einer Zusammensetzung **Z** erhalten wurde,
**dadurch gekennzeichnet,**
**dass** eine Zusammensetzung **Z** umfassend
a) mindestens ein Epoxidharz **A;**
b) mindestens einen Härter B für Epoxidharze; und
c) Zinkpartikel;
punktuell in einer durchschnittlichen Schichtdicke (*S*) von 0.5 bis 8 cm am Bewehrungsstahl (1) angebracht wird und danach mit einer Schicht Beton (2) oder Mörtel (6) überdeckt wird, sodass die Schicht, welche durch die Aushärtungsreaktion einer Zusammensetzung **Z** erhalten wurde zumindest teilweise zwischen einer Schicht Bewehrungsstahl (1) und einer Schicht Beton (2) oder Mörtel (6) liegt.

13. Verfahren gemäss Anspruch 12,
**dadurch gekennzeichnet,**
**dass** die Zusammensetzung **Z** in einer durchschnittlichen Schichtdicke (*S*) von 0.75 bis 6 cm, bevorzugt von 1 bis 4 cm, angebracht wird.

14. Zusammensetzung **Z** umfassend mindestens ein Epoxidharz **A**; mindestens einen Härter **B** für Epoxidharze; Zinkpartikel; sowie ein Metallhalogenid, insbesondere ein Lithiumhalogenid, bevorzugt Lithiumchlorid.

## Claims

1. Use of a composition Z comprising:
a) at least one epoxy resin **A**;
b) at least one curing agent **B** for epoxy resins; and
c) zinc particles;
as cathodic corrosion protection for reinforcements (1) of reinforced concrete structures (2), **characterised in that** the composition **Z** is applied to the reinforcing steel at certain points and in an average layer thickness (*S*) of from 0.5 to 8 cm.

2. Use according to claim 1, **characterised in that** the composition **Z** has a pasty consistency.

3. Use according to any of the preceding claims, **characterised in that** the proportion of the epoxy resin **A** is from 5 to 25 % by weight, more particularly from 8 to 20 % by weight, preferably from 10 to 16 % by weight, and **in that** the proportion of the zinc particles is from 55 to 90 % by weight, more particularly from 60 to 85 % by weight, preferably from 65 to 80 % by weight, based on the total weight of the composition **Z**.

4. Use according to any of the preceding claims, **characterised in that** the zinc particles are selected from the group consisting of zinc dust, zinc powder, zinc chips, zinc flakes, zinc grit, zinc granules and the like.

5. Use according to any of the preceding claims, **characterised in that** the zinc particles have an average particle size of from 0.5 to 500 µm, more particularly of from 1 to 50 µm, preferably of from 10 to 20 µm.

6. Use according to any of the preceding claims, **characterised in that** the composition **Z** is applied to the reinforcing steel (1) at certain points and in an average layer thickness (*S*) of from 0.75 to 6 cm, preferably of from 1 to 4 cm.

7. Use according to any of the preceding claims, **characterised in that** in each case from 100 to 500 g, more particularly from 150 to 400 g, preferably from 200 to 300 g of the composition **Z** (3) are applied at certain points to the reinforcing steel (1).

8. Use according to any of the preceding claims, **characterised in that** the composition **Z** (3) is applied to the reinforcing steel (1) at certain points in a plurality of regions at a distance (*d*) of from 30 to 200 cm, more particularly of from 40 to 150 cm, preferably of from 50 to 120 cm.

9. Use according to any of the preceding claims, **characterised in that** the composition **Z** is present as a two- or three-component composition.

10. Use according to any of the preceding claims, **characterised in that** the composition **Z** is present as a three-component composition, the first component **K1** comprising the epoxy resin **A,** the second component **K2** comprising the curing agent **B** and the third component **K3** comprising the zinc particles.

11. Use according to any of claims 1 to 9, **characterised in that** the composition Z is present as a two-component composition, the zinc particles either being contained in a first component **K1'** together with the epoxy resin **A**, or being contained in a second component **K2'** together with the curing agent **B**, or being contained in both components **K1'** and **K2'**.

12. Method for producing a laminate body (4) consisting of reinforcing steel (1), concrete (2) and/or mortar (6) and a layer which has been obtained by the curing reaction of a composition **Z, characterised in that** a composition **Z** comprising
a) at least one epoxy resin **A**,
b) at least one curing agent **B** for epoxy resins, and
c) zinc particles
is applied to the reinforcing steel (1) at certain points and in an average layer thickness (*S*) of from 0.5 to 8 cm and is then covered by a layer of concrete (2) or mortar (6), such that the layer which has been obtained by the curing reaction of a composition **Z** is positioned at least in part between a layer of reinforcing steel (1) and a layer of concrete (2) or mortar (6).

13. Method according to claim 12, **characterised in that** the composition **Z** is applied in an average layer thickness (*S*) of from 0.75 to 6 cm, preferably of from 1 to 4 cm.

14. Composition **Z** comprising at least one epoxy resin **A**, at least one curing agent **B** for epoxy resins, zinc particles, and a metal halide, more particularly a lithium halide, preferably lithium chloride.

## Revendications

1. Utilisation d'une composition Z comprenant :
a) au moins une résine époxyde A ;
b) au moins un durcisseur B pour résines époxydes ; et
c) des particules de zinc ;
comme protection cathodique contre la corrosion pour armatures (1) d'ouvrages de béton armé (2),
**caractérisée en ce que** la composition Z est appliquée de manière ponctuelle et sur une épaisseur de couche moyenne (*S*) de 0,5 à 8 cm sur l'acier d'armature.

2. Utilisation selon la revendication 1,
**caractérisée en ce que**
la composition Z présente une consistance pâteuse.

3. Utilisation selon l'une quelconque des revendications précédentes,
**caractérisée en ce que**
la fraction de résine époxyde A est de 5 à 25 % en poids, en particulier de 8 à 20 % en poids, de préférence de 10 à 16 % en poids ; et
la fraction de particules de zinc est de 55 à 90 % en poids, en particulier de 60 à 85 % en poids, de préférence de 65 à 80 % en poids ;
par rapport au poids total de la composition Z.

4. Utilisation selon l'une quelconque des revendications précédentes,
**caractérisée en ce que**
les particules de zinc sont choisies dans le groupe constitué de la poussière de zinc, de la poudre de zinc, des copeaux de zinc, des lamelles de zinc, de menus fragments de zinc, des granulats de zinc, etc.

5. Utilisation selon l'une quelconque des revendications précédentes,
**caractérisée en ce que**
les particules de zinc présentent une taille particulaire moyenne de 0,5 à 500 µm, en particulier de 1 à 50 µm, de préférence de 10 à 20 µm.

6. Utilisation selon l'une quelconque des revendications précédentes,
**caractérisée en ce que**
la composition Z est appliquée sur une épaisseur de couche moyenne (*S*) de 0,75 à 6 cm, de préférence de 1 à 4 cm, sur l'acier d'armature (1).

7. Utilisation selon l'une quelconque des revendications précédentes,
**caractérisée en ce que**
respectivement 100 à 500 g, en particulier 150 à 400 g, de préférence 200 à 300 g, de la composition Z (3) sont appliqués ponctuellement sur l'acier d'armature (1).

8. Utilisation selon l'une quelconque des revendications précédentes,
**caractérisée en ce que**
la composition Z (3) est appliquée ponctuellement en plusieurs emplacements à une distance (d) de 30 à 200 cm, en particulier de 40 à 150 cm, de préférence de 50 à 120 cm, sur l'acier d'armature (1).

9. Utilisation selon l'une quelconque des revendications précédentes,
**caractérisée en ce que**
la composition Z se présente sous la forme d'une composition à deux ou trois composants.

10. Utilisation selon l'une quelconque des revendications précédentes,
**caractérisée en ce que**
la composition Z se présente sous la forme d'une composition à trois composants, dans laquelle le premier composant K1 comprend la résine époxyde A ; le deuxième composant K2 comprend le durcisseur B ; et le troisième composant K3 comprend les particules de zinc.

11. Utilisation selon l'une quelconque des revendications 1 à 9,
**caractérisée en ce que**
la composition Z se présente sous la forme d'une composition à deux composants, dans laquelle les particules de zinc
soit sont contenues dans un premier composant K1' conjointement avec la résine époxyde A ;
soit sont contenues dans un second composant K2' conjointement avec le durcisseur B ;
soit sont également contenues dans les deux composants K1' et K2'.

12. Procédé de fabrication d'un corps composite stratifié (4) constitué d'acier d'armature (1), de béton (2) et/ou de mortier (6) et d'une couche qui a été obtenue par la réaction de durcissement d'une composition Z,
**caractérisé en ce que**
une composition Z comprenant :
a) au moins une résine époxyde A ;
b) au moins un durcisseur B pour résines époxydes ; et
c) des particules de zinc ;
est appliquée ponctuellement sur une profondeur de couche moyenne (*S*) de 0,5 à 8 cm sur l'acier d'armature (1) et est ensuite revêtue d'une couche de béton (2) ou de mortier (6) de sorte que la couche, qui a été obtenue par réaction de durcissement d'une composition Z, se situe au moins en partie entre une couche d'acier d'armature (1) et une couche de béton (2) ou de mortier (6).

13. Procédé selon la revendication 12,
**caractérisé en ce que**
la composition Z est appliquée sur une profondeur de couche moyenne (*S*) de 0,75 à 6 cm, de préférence de 1 à 4 cm.

14. Composition Z comprenant au moins une résine époxyde A ; au moins un durcisseur B pour résines époxydes ; des particules de zinc ; ainsi qu'un halogénure métallique, en particulier un halogénure de lithium, de préférence du chlorure de lithium.
